(19) **Europäisches Patentamt**
**European Patent Office**
**Office européen des brevets**

(11) Veröffentlichungsnummer : **0 385 926 B1**

(12) # EUROPÄISCHE PATENTSCHRIFT

(45) Veröffentlichungstag der Patentschrift :
**04.03.92 Patentblatt 92/10**

(51) Int. Cl.$^5$ : **A01M 7/00**

(21) Anmeldenummer : **90810086.0**

(22) Anmeldetag : **07.02.90**

(54) **Vorrichtung zum Ausbringen von Pflanzenschutzmitteln.**

(30) Priorität : **16.02.89 DE 3904759**

(43) Veröffentlichungstag der Anmeldung :
**05.09.90 Patentblatt 90/36**

(45) Bekanntmachung des Hinweises auf die
Patenterteilung :
**04.03.92 Patentblatt 92/10**

(84) Benannte Vertragsstaaten :
**AT BE CH DE DK ES FR GB IT LI NL SE**

(56) Entgegenhaltungen :
**EP-A- 0 201 981**
**EP-A- 0 304 102**
**AU-B- 504 816**
**DE-A- 3 707 186**
**DE-U- 8 509 175**
**DE-U- 8 809 599**
**US-A- 3 967 920**
**US-A- 4 112 964**
**US-A- 4 580 721**
**US-A- 4 790 666**

(73) Patentinhaber : **CIBA-GEIGY AG**
**Klybeckstrasse 141**
**CH-4002 Basel (CH)**
(84) **BE CH DK ES FR GB IT LI NL SE AT**

Patentinhaber : **David, Heinrich**
**Sandgasse 28**
**W-6366 Wölfersheim 1 (DE)**
(84) **BE CH DE DK ES FR GB IT LI NL SE AT**

Patentinhaber : **HORA**
**LANDWIRTSCHAFTLICHE BETRIEBSMITTEL**
**GMBH**
**Liebigstrasse 51/53**
**W-6000 Frankfurt 17 (DE)**
(84) **DE**

(72) Erfinder : **Nau, Karl Ludwig, Dr.**
**Chemnitzerstrasse 23**
**W-6112 Gross-Zimmern (DE)**
Erfinder : **Raffel, Hans, Dr.**
**Am Sternes**
**W-6713 Freinsheim (DE)**
Erfinder : **David, Heinrich**
**Sandgasse 28**
**W-6366 Wölfersheim 1 (DE)**

(74) Vertreter : **Kleewein, Walter, Dr. et al**
**Patentabteilung CIBA-GEIGY AG Postfach**
**CH-4002 Basel (CH)**

EP 0 385 926 B1

Jouve, 18, rue Saint-Denis, 75001 PARIS

## Beschreibung

Die Erfindung betrifft eine Vorrichtung nach dem Oberbegriff des Anspruchs 1.

Eine Vorrichtung dieser Art ist aus der EP-A-201 981 bekannt, wobei das Volumen des von der Förderpumpe an die Spritzdüsen gelieferten Trägerfluids in Abhängigkeit von der Menge der zugegebenen aktiven Substanz durch eine elektrische Steuereinrichtung gesteuert wird, die einen der beiden Fluidströme überwacht, um die Konzentration der aktiven Substanz im Trägerfluid unabhängig von der Fahrgeschwindigkeit des Traktors konstant zu halten, an dem die Vorrichtung angebracht ist. Die Menge der aktiven Substanz wird zwar in Abhängigkeit von der Fahrgeschwindigkeit gesteuert, die Konzentration bleibt aber unabhängig von der Fahrgeschwindigkeit. Die Dosierpumpe für die aktive Substanz wird durch einen Motor angetrieben. Sie soll aber auch so ausgebildet sein können, daß die Dosierpumpe von dem von der Förderpumpe gelieferten, unter Druck stehenden Trägerfluid angetrieben wird. Wie in diesem Falle die Dosierpumpe ausgebildet und die Steuerung des Volumens des Trägerfluids in Abhängigkeit von der Menge der zugegebenen aktiven Substanz erfolgen soll, ist nicht angegeben.

Bei dieser Vorrichtung ist für die Konstanthaltung der Konzentration der aktiven Substanz im Trägerfluid unabhängig von der Fahrgeschwindigkeit eine aufwendige Steuereinrichtung erforderlich, die den Antrieb der Förderpumpe an die gelieferte Menge der aktiven Substanz anpaßt. Zur Einstellung der Konzentration der aktiven Substanz im Trägerfluid wird über die Steuereinrichtung der Antrieb der Dosierpumpe verändert, wodurch eine weitere Funktion der Steuereinrichtung erforderlich ist.

Eine von Trägerfluid durelströmte und angetriebene Pumpe ist beispielsweise aus der DE-C-3707186 bekannt.

Aus der AU-B-504 816 ist eine Vorrichtung zum Zudosieren eines flüssigen Düngemittels oder dgl. in einen durch eine Hauptleitung fließenden Wasserstrom bekannt, wobei durch eine Querschnittsreduktion, z.B. eine Venturidüse, in der Hauptleitung ein Druckabfall im Wasserstrom erzeugt wird. Vor und hinter dieser Querschnittsreduktion ist an die Hauptleitung jeweils eine Schlauchleitung angeschlossen, die zu einer Pumpe führt, welche über ein Tauchrohr mit einem Präparatbehälter verbunden ist. Durch den höheren Druck in der vor der Querschnittsreduktion angeschlossenen Schlauchleitung wird ein Membrankolben in der Pumpe beaufschlagt, der mit Ventilen versehen und durch eine Feder beaufschlagt ist und aus dem Behälter Düngemittel ansaugt, das durch die stromab von der Querschnittsreduktion angeschlossene Schlauchleitung, in der ein niedrigerer Druck herrscht, in die Hauptleitung eingespeist wird.

Bei dieser Vorrichtung muß eine bestimmte Druckdifferenz in der Hauptleitung aufgebaut werden, damit die Federkraft am Membrankolben der Pumpe überwunden wird und die Pumpe arbeitet. Eine exakte Dosierung, wie sie für Pflanzenschutzmittel erforderlich ist, kann damit nicht erreicht werden. Die Einstellung der Konzentration des Düngemittels im Wasserstrom muß in der Weise vorgenommen werden, daß die Druckdifferenz in der Hauptleitung verändert wird. Auf diese Weise ist eine exakte Einstellung der Konzentration nicht möglich.

Aus der DE-U-88 09 599 ist schließlich eine Sprühvorrichtung in Form eines in der Hand zu haltenden Sprührohrs bekannt, wobei am Austrittsende des Sprührohrs ein Einweg-Zusatzfluidspender montiert wird, der aus einem zylindrischen Gehäuse und einem darin auf einem Führungsrohr verschiebbar angeordneten Kolben besteht. Primärfluid aus dem Sprührohr strömt durch dieses Führungsrohr in eine Austrittsdüse am Zusatzfluidspender aus, während ein Teilstrom des Primärfluids den Kolben beaufschlagt, damit das in dem Zusatzfluidspender enthaltene Zusatzfluid mittels des Kolbens in die Austrittsdüse gedrückt wird, in der eine Vermischung mit dem aus dem Führungsrohr austretenden Primärfluid erfolgt. Eine genaue Dosierung ist mit dieser Vorrichtung nicht möglich, weil durch eine geringe Menge an Primärfluid der Kolben in dem Zusatzfluidspender nicht aus seiner Ruhelage bewegt werden kann. Auch ist aufgrund der Reibung des Kolbens in dem Gehäuse eine Dosierung nicht vorherbestimmbar und eine Einstellung der Konzentration des Zusatzfluids im Primärfluid ist nicht möglich.

Der Erfindung liegt die Aufgabe zugrunde, eine Vorrichtung der eingangs angegebenen Art so auszubilden, daß ohne aufwendige Steuereinrichtung für die Konzentration des Pflanzenschutzmittels im Trägerfluid eine zuverlässige und genaue Dosierung möglich ist.

Diese Aufgabe wird durch die Merkmale im Kennzeichen des Anspruchs 1 gelöst. Durch die Reihenschaltung von Förderpumpe und Dosierpumpe in der Leitung wird nicht nur ein Teilstrom, sondern das gesamte durch die Leitung strömende Trägerfluid für den Antrieb des Antriebselementes in der Dosierpumpe eingesetzt, wodurch sich eine zuverlässige Dosierung des Pflanzenschutzmittels bzw. Präparates in Abhängigkeit vom Volumen des Trägerfluids ergibt. Eine aufwendige Steuerung für die Konzentration des Präparates im Trägerfluid ist nicht erforderlich, weil die durch die Einstellung an der Dosiereinrichtung vorgegebene Konzentration auch dann selbsttätig beibehalten wird, wenn sich der Durchsatz an Trägerfluid in der Leitung ändert. Da das gesamte Trägerfluid die Dosiereinrichtung antreibt, wird bei einem geringen Durchsatz an Trägerfluid eine geringe Menge und bei einem größeren Durchsatz an Trägerfluid eine entsprechend größere Menge an Prä-

2

parat zudosiert. Die Einstellung der Konzentration kann in einfacher Weise an der Dosiereinrichtung vorgenommen werden.

Bei der erfindungsgemäßen Bauweise, bei der das vom Trägerfluid angetriebene Antriebselement mit einem Dosierelement verbunden ist, ist es auch möglich, mit dem Antriebselement der Dosierpumpe mehrere Dosierelemente zu verbinden, die jeweils durch eine gesonderte Verbindungsleitung an verschiedene Präparatbehälter gleichzeitig angeschlossen sind, wobei die aus jedem einzelnen Präparatbehälter zu entnehmende Menge gesondert und unabhängig von den anderen Präparatbehältern eingestellt werden kann. Damit können mehrere Präparatbehälter gleichzeitig bei einfachem Aufbau an die Vorrichtung angeschlossen werden.

Vorteilhafte Ausgestaltungen der Erfindung sind in den weiteren Ansprüchen angegeben.

Beispielsweise Ausführungsformen der Erfindung werden nachfolgend anhand der Zeichnung näher erläutert. Es zeigen:

Fig. 1 in schematischer Darstellung die Anordnung der wesentlichen Elemente der Vorrichtung,

Fig. 2 eine Ausführungsform für den gleichzeitigen Anschluß mehrerer Präparatbehälter, und

Fig. 3 schematisch eine Baueinheit für den Einbau in eine Leitung.

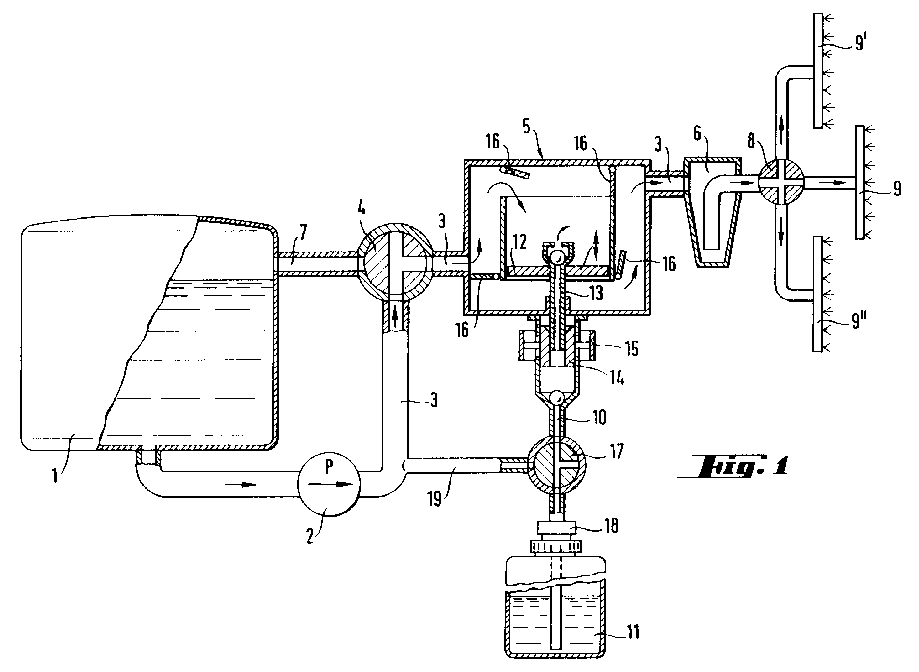

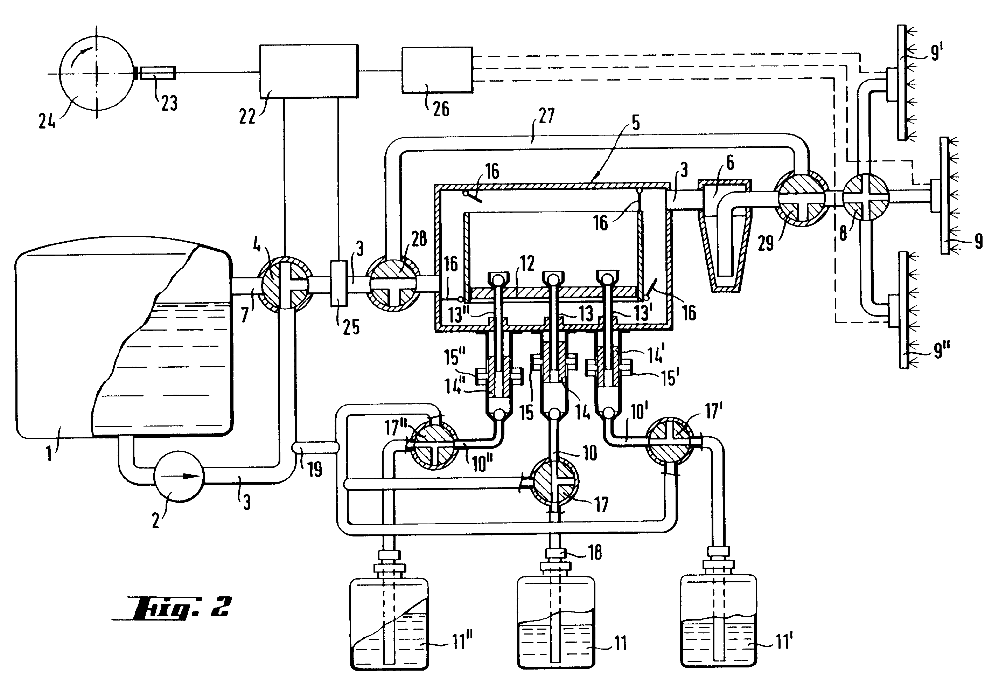

In Fig. 1 und 2 ist mit 1 ein Tank für Trägerfluid, üblicherweise Wasser, bezeichnet, der beispielsweise ein Füllvolumen von ca. 500 l haben kann. Eine Förderpumpe 2 fördert Wasser aus dem Tank 1 durch eine Leitung 3, in der ein Kugelhahn 4, eine Dosierpumpe 5 und ein Mischer 6 angeordnet sind. Mit 7 ist eine Rücklaufleitung zwischen dem Kugelhahn 4 und dem Tank 1 bezeichnet. An die Leitung 3 ist über einen Verteiler 8 ein Spritzgestänge mit z.B. drei Teilbreiten-Spritzvorrichtungen 9, 9', 9'' angeschlossen, die jeweils aus einem mit Spritzdüsen versehenen Leitungsabschnitt bestehen. Die Dosierpumpe 5 ist über eine Verbindungsleitung 10 mit einem Pflanzenschutzmittel- bzw. Präparatbehälter 11 verbunden, der aus einem handelsüblichen Kunststoffkanister mit einem Fassungsvermögen von beispielsweise 5 l bestehen kann.

Die Dosierpumpe 5 saugt aus dem Präparatbehälter 11 das in flüssiger Form vorliegende Pflanzenschutzmittel ab und setzt es dem durch die Dosierpume strömenden Wasserstrom in der Weise zu, daß einem bestimmten Volumen an Wasser eine bestimmte Menge an Pflanzenschutzmittel zugegeben wird.

Es wird eine Dosierpumpe 5 vorgesehen, die von dem gesamten, von der Förderpumpe 2 durch die Leitung 3 gelieferten Wasserstrom durchströmt wird, wobei durch diesen Wasserstrom ein Antriebselement beispielsweise in der Form eines Kolbens 12 in der Dosierpumpe 5 so angetrieben wird, daß der Kolben 12 eine Hin- und Herbewegung ausführt. Mit dem Kolben 12 ist eine Dosiereinrichtung verbunden, die bei dem schematisch dargestellten Ausführungsbeispiel als hohler, mit einem Rückschlagventil versehener Dosierkolben 13 ausgebildet ist, der in einem Zylinder 14 verschiebbar ist. An dem Zylinder 14 ist zur Einstellung des wirksamen Saughubs des Dosierkolbens 13 eine Einstellhülse 15 angebracht, mittels der die Konzentration des Präparats im Trägerfluid bzw. die angesaugte Präparatmenge eingestellt werden kann. Diese Dosiereinrichtung ist durch die Verbindungsleitung 10 an den Präparatbehälter 11 angeschlossen und fördert Präparat aus dem Präparatbehälter durch den hohlen Dosierkolben 13 in den Hubraum des Kolbens 12, von dem aus das Präparat zusammen mit dem Trägerfluid in die zum Mischer 6 führende Leitung 3 gelangt.

In der schematischen Darstellung der Dosierpumpe 5 sind bei 16 Ventile angedeutet, die in Abhängigkeit von der Kolbenbewegung abwechselnd den Einlaß für das Trägerfluid in den Raum über dem Kolben 12 und gleichzeitig den Auslaß des Raumes unter dem Kolben freigeben, während die anderen Ventile geschlossen sind, und umgekehrt. Diese Ventile 16 werden durch das unter Druck stehende Trägerfluid und die Kolbenbewegung umgeschaltet. Diese volumengesteuerte Dosierpumpe arbeitet somit ohne Fremdenergie.

Vorzugsweise wird als Dosierpumpe 5 die in der DE-C-37 07 186 beschriebene verwendet. Eine geeignete Dosiereinrichtung, deren Dosierkolben an dem Membrankolben der Dosierpumpe nach der DE-C-37 07 186 befestigt wird, ist in der DE-C-24 15 109 beschrieben. Mittels der Einstellhülse dieser Dosiereinrichtung kann beispielsweise eine Zudosierung von 0,05 bis 10 l/ha Präparat bei einem Wasserausbringvolumen von 100 bis 600 l/ha, unabhängig von der Fahrgeschwindigkeit, eingestellt werden.

Anstelle der beschriebenen Dosierpumpe 5 mit Kolben 12 und daran befestigtem Dosierkolben 13 kann auch eine andere Bauweise einer Pumpe vorgesehen werden, bei der ein drehbar gelagertes Antriebselement, beispielsweise ein Schaufelrad, vom Trägerfluid angetrieben wird, wobei das sich drehende Schaufelrad mit einer Dosiereinrichtung verbunden ist, die ein drehbares Dosierelement aufweist, das Präparat aus dem Präparatbehälter ansaugt und in den Strom des Trägerfluids durch die Dosierpumpe 5 bzw. in die Leitung 3 fördert.

Um eine gute Durchmischung des zugesetzten Präparats im Trägerfluid zu erhalten, ist der Dosierpumpe 5 ein Mischer 6 nachgeschaltet, der bei dem dargestellten Ausführungsbeispiel eine nach unten konisch zulaufende Mischkammer aufweist, wobei ein Tauchrohr in den unteren Abschnitt der Mischkammer ragt. Diese Ausführungsform eines Mischers arbeitet nach dem Zyklonprinzip und gewährleistet eine gleichmäßige Durchmischung der Spritzflüssigkeit. Durch die konische Formgebung wird zudem gewährleistet, daß der Einfluß der Viskosität auf die zu mischenden Fluide ausgeschaltet wird, so daß auch hochviskose Mittel eingesetzt werden können. Zwar kann durch die Dosierpumpe 5 ein hochviskoses Mittel genau zudosiert werden, jedoch wird dabei noch keine gute Durchmischung erhalten. Diese gewährleistet der Mischer 6, der auch in anderer Weise als dargestellt ausgebildet sein kann.

Das Volumen der Mischkammer wird zweckmäßigerweise auf jenes Volumen abgestimmt, das einem Hub des Kolbens 12 in der Dosierpumpe 5 entspricht. Vorzugsweise ist das Volumen der Mischkammer gleich dem in der Dosierpumpe 5 mit einer Dosis versetzten Bezugsvolumen.

Die Leitungswege zwischen Dosierpumpe 5 und Verteiler 8 des Spritzgestänges werden so kurz wie möglich gehalten. Aufgrund der guten Durchmischung der Spritzflüssigkeit im Mischer 6 bedarf es keiner weiteren Durchmischung in den von der Spritzflüssigkeit durchströmten Leitungen. In gleicher Weise wird die Verbindungsleitung 10 zwischen Dosiereinrichtung und Präparatbehälter 11 so kurz wie möglich ausgelegt, um die kontaminierten Bereiche der Vorrichtung so klein wie möglich zu halten.

Beim Betrieb der z.B. an einem Traktor angebrachten Vorrichtung wird der der Dosierpumpe 5 zugeführte Wasserstrom in Abhängigkeit von der Fahrgeschwindigkeit gesteuert. Nach Einschalten der Förderpumpe 2 ergibt sich eine sehr kurze Anlaufzeit von beispielsweise 10 bis 15 Sekunden für den Aufbau einer konstanten Spritzflüssigkeitskonzentration, die dann ohne Schwankungen beibehalten wird. Damit kann das Einsetzen der Spritzarbeit auf dem Feld sehr genau gesteuert werden. Durch die Direkteinspeisung mittels der Dosierpumpe 5 befindet sich jeweils nur ein kleiner Teil der Spritzflüssigkeit in der Vorrichtung, der für die gesamte Spritzarbeit benötigt wird. Dies trägt dazu bei, daß die Konzentration der Spritzflüssigkeit konstant gehalten wird.

Bei Beendigung der Spritzarbeit kann das Ausbringen der Spritzflüssigkeit sehr schnell beendet werden, weil sich nur eine geringe, vorbestimmte Menge an Spritzflüssigkeit in der Vorrichtung zwischen Dosierpumpe 5 und Spritzdüsen am Spritzgestänge befindet. Diese Menge kann beispielsweise jener Menge entsprechen, die für die letzten 10 Meter Fahrstrecke zur Bearbeitung benötigt werden. Damit ist die Reinigung der kurzen, von Spritzflüssigkeit kontaminierten Leitungsabschnitte in einfacher Weise möglich. Hierzu ist an der Verbindungsleitung 10 zwischen Dosiereinrichtung und Präparatbehälter 11 ein Umschaltventil 17 vorgesehen, mittels dem über eine Leitung 19 eine Verbindung der Dosiereinrichtung mit einem nur Wasser führenden Abschnitt der Leitung 3 oder mit dem Tank 1 bzw. einem nicht dargestellten, gesonderten Wasserbehälter, vom Fahrersitz aus herstellbar ist. Kurz vor Beendigung der Spritzarbeit kann die Dosierpumpe 5 mit der Leitung 3 bzw. dem Tank 1 verbunden werden, so daß der kontaminierte Bereich zwischen Dosierpumpe 5 und Spritzdüsen mit Wasser gespült und damit gereinigt wird.

Für den Anschluß des Präparatbehälters 11 an die Verbindungsleitung 10 wird zweckmäßigerweise ein bei 18 schematisch angedeuteter Schnellverschluß vorgesehen, mittels dem der Behälter 11 schnell und einfach an die Vorrichtung angeschlossen werden kann. Am Behälter 11 kann eine mit einem Tauchrohr versehene Verschlußkappe vorgesehen sein, an die unmittelbar die Verbindungsleitung 10 mittels einer Schnellkupplkung angeschlossen werden kann, so daß das Tauchrohr dauernd im Behälter 11 verbleibt.

Fig. 2 zeigt eine Ausführungsform, bei der an dem Kolben 12 der Dosierpumpe 5 beispielsweise drei Dosierkolben 13, 13', 13" befestigt sind, denen jeweils ein Zylinder mit Einstellhülse zugeordnet ist und die jeweils an einen gesonderten Präparatbehälter 11, 11', 11" angeschlossen sind. Auf diese Weise können gleichzeitig mehrere Präparatbehälter an eine einzige Dosierpumpe 5 angeschlossen werden, wobei die jedem einzelnen Präparatbehälter zu entnehmende Dosis gesondert an der jeweiligen Einstellhülse 15 eingestellt werden kann.

Werden auf gegenüberliegenden Seiten des Kolbens 12 Dosierkolben 13 befestigt, so können durch die Dosierpumpe 5 bis zu acht verschiedene Präparatbehälter gleichzeitig angeschlossen werden, wobei in diesem Falle acht verschiedene Präparate mit unterschiedlicher Dosierung in das Trägerfluid eingespeist werden können.

Wird eine Dosierpumpe mit einem drehbaren Antriebselement anstelle des hin- und hergehenden Kolbens 12 verwendet, so können ebenfalls mehrere Dosiereinrichtungen betätigt werden, beispielsweise indem an dem drehbaren Antriebselement ein Zahnrad angebracht wird, das mit weiteren Zahnrädern an verschiedenen Dosiereinrichtungen in Eingriff steht.

Fig. 2 zeigt ferner eine Ausführungsform einer rechnergesteuerten Vorrichtung. An einen Rechner 22 ist ein Drehzahlsensor 23 angeschlossen, der über die Drehzahl der Antriebswelle 24 oder eines Rades am Traktor die Geschwindigkeit aufnimmt und an den Rechner 22 weitergibt. Ein Durchflußmeßgerät 25 gibt an den Rechner 22 Signale entsprechend dem Durchsatz an Wasser in der Leitung 3. Ferner ist an den Rechner 22 eine Steuerschaltung 26 für die einzelnen Teilbreiten angeschlossen, die über gestrichelt dargestellte Verbindungsleitungen mit nicht dargestellten Ventilen an den einzelnen Teilbreiten 9, 9', 9" verbunden ist. Eine weitere Verbindungsleitung vom Rechner 22 führt zum Kugelhahn 4, um den Durchsatz an Trägerfluid bzw. Wasser zur Dosierpumpe zu steuern. Es ist auch möglich, vom Rechner 22 aus den Antriebsmotor der Förderpumpe 2 in Abhängigkeit von der Fahrgeschwindigkeit oder einem anderen Parameter zu steuern.

Vor Arbeitsbeginn werden das Durchflußmeßgerät 25 und der Drehzahlsensor 23 zur Emrittlung der Fahrstrecke kalibriert und es werden dem Rechner 22 die Werte der auszubringenden Menge und der Teilbreitenzahl bzw. der Düsenzahl pro Teilbreite eingegeben. Über den Anschluß an die Steuerschaltung 26 erhält der Rechner 22 die Mitteilung, ob und welche Teilbreiten geschaltet sind. Während der Spritzarbeit werden ständig Signale bezüglich Wegstrecke und Durchfluß in der Leitung 3 an den Rechner gegeben, der den vorgegebenen Soll-Wert mit dem Ist-Wert entsprechend den eingehenden Signalen vergleicht und bei Abweichungen vom Sollwert den Kugelhahn 4 ansteuert, über den der Durchsatz in der Leitung 3 durch Drucksteuerung entsprechend beeinflußt wird. Auf diese Weise erhält man eine Überwachung und eine Nachregulierung der vorgegebenen Wasseraufwandmenge zur Vermeidung einer Unter- oder Überdosierung aufgrund von Schwankungen der Fahrgeschwindigkeit.

Nach einer weiteren Ausgestaltung kann unmittelbar im Anschluß an den Mischer 6 eine Konzentrationsprüfung der Spritzflüssigkeit mittels eines geeigneten Gerätes vorgenommen werden, das die festgestellte Konzentration an den Rechner 22 gibt, der diesen Ist-Wert mit einem Soll-Wert vergleicht und im Falle einer Abweichung die Einstellhülse 15 an der Dosiereinrichtung entsprechend ansteuert, um den Ist-Wert auf den Soll-Wert zu bringen.

Es ist auch möglich, an der Dosierpumpe einen Signalgeber vorzusehen, der den Betrieb der Dosierpumpe 5 überwacht und im Falle einer Betriebsunterbrechung der Dosierpumpe 5 ein akustisches oder optisches Alarmsignal in der Fahrerkabine liefert. Eine solche Überwachungseinrichtung kann auch mit dem zuvor beschriebenen Konzentrationsprüfungsgerät verbunden werden, so daß ein Alarm an den Fahrer gegeben wird, wenn die Konzentration der Spritzflüssigkeit extrem von dem Soll-Wert abweicht.

Das Umschaltventil 17 wird zweckmäßigerweise aus der Fahrerkabine elektromagnetisch ansteuerbar ausgebildet, damit während der Spritzarbeit kurz vor deren Ende auf Spülung umgeschaltet werden kann.

Um einen Betrieb der Vorrichtung in herkömmlicher Weise zu ermöglichen, kann eine Bypaßleitung 27 vorgesehen werden, welche über Umschaltventile bzw. 3-Wege-Ventile 28, 29 vor der Dosierpumpe 5 und hinter dem Mischer 6 an die Leitung 3 angeschlossen ist und die Dosierpumpe 5 sowie den Mischer 6 umgeht. Diese Bypaßleitung 27 ist auch für den Einsatz der Vorrichtung zur Düngung zweckmäßig, wobei es einer Dosierung durch die Dosierpumpe 5 nicht bedarf.

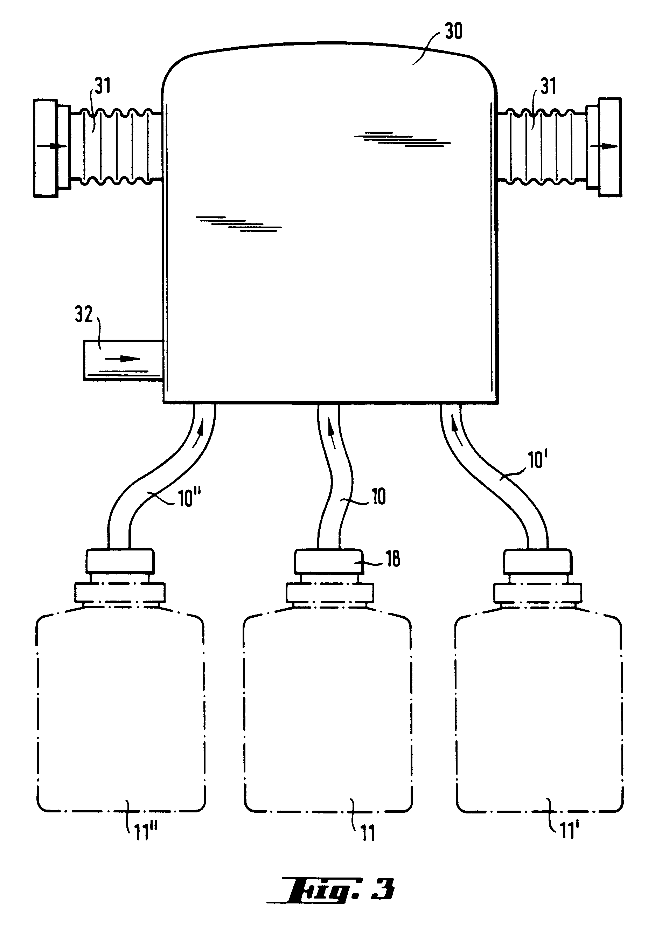

Mit der beschriebenen Vorrichtung kann jedes Pflanzenschutzgerät nachgerüstet werden. Hierfür wird zweckmäßigerweise eine Baueinheit aus Dosierpumpe 5 mit Dosiereinrichtung 13, 14, 15 sowie gegebenenfalls dem Mischer 6 vorgesehen, die mit entsprechenden Anschlüssen ausgerüstet ist, so daß diese Baueinheit in eine vorhandene Leitung 3 eines Spritzgerätes eingesetzt werden kann. In diese Baueinheit wird zweckmäßigerweise eine Halterung für den Präparatbehälter 11 und ein Schnellverschluß für dessen Anschluß integriert. Um diese Baueinheit gegenüber Verschmutzungen durch Staub und Spritzwasser zu schützen, wird die Baueinheit vorzugsweise gekapselt ausgebildet, wie dies schematisch in Fig. 3 angedeutet ist, wobei die Baueinheit mit 30 bezeichnet ist. Mit 31 sind elastische Leitungsabschnitte bezeichnet, die für den Anschluß an die Leitung 3 eines Spritzgerätes vorgesehen sind und die Baueinheit 30 gegenüber Erschütterungen bei der Spritzarbeit schützen. Bei 32 ist an der Baueinheit 30 ein Anschluß für die Spülleitung 19 vorgesehen, wobei das Umschaltventil 17 in die Baueinheit 30 integriert sein kann.

Anstelle eines Behälters 11 mit flüssigem Präparat kann auch ein Behälter mit pulver- oder granulatförmigem Präparat vorgesehen werden, wobei dieses Präparat durch Zumischung von Wasser in einem Mischbehälter aufbereitet wird und dann aus diesem Mischbehälter das angeteigte Präparat durch die Dosiereinrichtung 13, 14, 15 entnommen wird. Bei einer solchen Ausgestaltung müßte in dem Mischbehälter ein Rührwerk vorgesehen werden.

Die Überwachung der Funktion der Dosierpumpe kann auch durch einen Schalter in der Verbindungs- bzw. Ansaugleitung 10 der Dosierpumpe 5 erfolgen. Die beschriebene Vorrichtung kann nicht nur an einem Traktor, sondern auch an einem Flugzeug angebracht werden.

## Patentansprüche

1. Vorrichtung zum Ausbringen von Pflanzenschutzmitteln und der gleichen, mit einem Tank (1) für Trägerfluid, z.B. Wasser, und einer Förderpumpe (2), die Trägerfluid aus diesem Tank (1) durch eine Leitung (3) pumpt, an der Spritzdüsen (9, 9′, 9″) angeschlossen sind, und mit einer Dosierpumpe (5), die durch eine Verbindungsleitung an einen Präparatbehälter (11) angeschlossen ist und von dem von der Förderpumpe (2) gelieferten Trägerfluid durchströmt und angetrieben wird, wobei die je nach Konzentration einstellbare Dosierpumpe (5) Pflanzenschutzmittel aus dem Präparatbehälter (11) in die Leitung (3) einspeist, **dadurch gekennzeichnet,** daß die Dosierpumpe (5) von dem gesamten, durch die Leitung (3) strömenden Trägerfluid durchströmt wird, wobei das Trägerfluid ein Antriebselement in Form eines Kolbens (12) beaufschlagt, der mit einer Dosiereinrichtung verbunden ist, die als in einem mit der Verbundungsleitung (10) verbundenen Zylinder (14) verschiebbarer Doseirkolben (13) ausgebildet und mit einer Einstelleinrichtung für die Konzentration versehen its, welche

<div style="text-align:center">5</div>

als Einstellhübse (15) zur Einstellung des wirkasmen Hubs des Dosierkolbens (13) ausgebildet ist.

2. Vorrichtung nach Anspruch 1, dadurch gekennzeichnet, daß mit dem Antriebselement (12) wenigstens zwei Dosiereinrichtungen (13, 14; 13', 14') verbunden sind, die jeweils an eine gesonderte Verbindungsleitung (10, 10') angeschlossen sind, die mit verschiedenen Präparatbehältern (11, 11') verbunden sind.

3. Vorrichtung nach den Ansprüchen 1 oder 2, dadurch gekennzeichnet, daß eine Einrichtung (4) zum Steuern der an die Spritzdüsen gelieferten Menge an Trägerfluid in Abhängigkeit von der Fortbewegungsgeschwindigkeit oder einem anderen Parameter der Vorrichtung vorgesehen ist.

4. Vorrichtung nach den Ansprüchen 1 bis 3, dadurch gekennzeichnet, daß der Dosierpumpe (5) ein Mischer (6) in der Leitung (3) nachgeschaltet ist.

5. Vorrichtung nach Anspruch 4, dadurch gekennzeichnet, daß der Mischer (6) als Zyklonmischer ausgebildet ist.

6. Vorrichtung nach den Ansprüchen 4 und 5, dadurch gekennzeichnet, daß das Volumen des Mischers (6) dem Aufnahmevolumen der Dosierpumpe (5) entsprechend einem Hub des Kolbens (12) entspricht.

7. Vorrichtung nach den vorhergehenden Ansprüchen, dadurch gekennzeichnet, daß zwischen Dosierkolben (13) und Präparatbehälter (11) ein Umschaltventil (17) angeordnet ist, das mit dem Tank (1) für Trägerfluid oder einem Abschnitt der Leitung (3) vor der Dosierpumpe (5) verbunden ist.

8. Vorrichtung nach den vorhergehenden Ansprüchen, dadurch gekennzeichnet, daß die Verbindungsleitung (10) mittels eines Schnellverschlusses (18) mit dem zugeordneten Präparatbehälter (11) verbunden ist.

9. Vorrichtung nach den vorhergehenden Ansprüchen, dadurch gekennzeichnet, daß die Dosierpumpe (5) kurz vor der Aufteilung der Leitung (3) in verschiedene Leitungssegmente bsw. Teilbreiten (9, 9', 9'') angeordnet ist.

10. Vorrichtung nach den vorhergehenden Ansprüchen, dadurch gekennzeichnet, daß die Dosierpumpe (5) und gegebenenfalls der Mischer (6) als gegen Staub und Verschmutzung geschützte Baueinheit (30) ausgebildet sind, die in eine vorhandene Leitung (3) einsetzbar ist.

11. Vorrichtung nach den vorhergehenden Ansprüchen, dadurch gekennzeichnet, daß die Dosierpumpe (5) und gegebenenfalls der Mischer (6) bzw. die Baueinheit (30) über elastische Leitungsabschnitte in die Leitung (3) einsetzbar sind.

12. Vorrichtung nach den vorhergehenden Ansprüchen, dadurch gekennzeichnet, daß eine Rechnereinrichtung mit einem Rechner (22), einem Durchflußmeßgerät (25), einem Sensor (23) zur Ermittlung der Fahrgeschwindigkeit, einer Steuervorrichtung (4) für die Durchflußmenge des Trägerfluids und einer Schaltsteuerung (26) zum Ansteuern einzelner Teilbreiten (9, 9', 9'') vorgesehen ist.


## Claims

1. A device for applying plant-protecting compositions and the like, having a tank (1) for carrier fluid, for example water, and a feed pump (2) that pumps carrier fluid from this tank (1) through a pipe (3) to which spray nozzles (9, 9', 9'') are connected, and having a metering pump (5) that is connected by a connecting pipe to a preparation container (11) and which metering pump the carrier fluid supplied by the feed pump (2) passes through and drives, the metering pump (5), which is adjustable according to the concentration, feeding plantprotecting composition from the preparation container (11) into the pipe (3), wherein the whole of the carrier fluid flowing through the pipe (3) passes through the metering pump (5), the carrier fluid acting on a drive element in the form of a piston (12) which is connected to a metering means which is in the form of a metering piston (13) displaceable in a cylinder (14) connected to the connecting pipe (10) and is provided with a setting means for the concentration in the form of a setting sleeve (15) for adjusting the effective stroke of the metering piston (13).

2. A device according to claim 1, wherein at least two metering means (13, 14; 13', 14') are connected to the drive element (12), each of which is connected to a separate connecting pipe (10, 10'), these connecting pipes being connected to different preparation containers (11, 11').

3. A device according to either claim I or claim 2, wherein a means (4) is provided for controlling the amount of carrier fluid supplied to the spray nozzles as a function of the speed of locomotion or some other parameter of the device.

4. A device according to claims 1 to 3, wherein a mixer (6) is connected in the pipe (3) downstream from the metering pump (5).

5. A device according to claim 4, wherein the mixer (6) is in the form of a cyclone mixer.

6. A device according to claims 4 and 5, wherein the volume of the mixer (6) corresponds to the take-up volume of the metering pump (5) corresponding to one stroke of the piston (12).

7. A device according to the preceding claims, wherein there is arranged between metering piston (13) and preparation container (11) a change-over valve (17) which is connected to the tank (1) for carrier fluid or to a portion of the pipe (3) upstream from the metering pump (5).

8. A device according to the preceding claims, wherein the connecting pipe (10) is connected by means of a quick-acting closure (18) to the associated preparation container (11).

9. A device according to the preceding claims, wherein the metering pump (5) is arranged shortly before the division of the pipe (3) into different pipe serpents or part-widths (9, 9′, 9″).

10. A device according to the preceding claims, wherein the metering pump (5) and, where applicable, the mixer (6) are designed as a modular unit (30) protected against dust and dirt which can be inserted into an existing pipe (3).

11. A device according to the preceding claims, wherein the metering pump (5) and, where applicable, the mixer (6), or the modular unit (30), can be inserted into the pipe (3) by way of resilient pipe portions.

12. A device according to the preceding claims, wherein there is provided a computer device with a computer (22), a flow meter (25), a sensor (23) for ascertaining the speed of travel, a control means (4) for the rate of flow of the carrier fluid, and a circuit control means (26) for controlling individual part-widths (9, 9′, 9″).

## Revendications

1. Dispositif pour distribuer des produits pour la protection des plantes (produits phytosanitaires) et des produits analogues, ce dispositif comportant une cuve (1) destinée à loger le fluide porteur, par exemple l'eau, et une pompe (2) d'alimentation, qui pompe le fluide porteur de cette cuve (1) à l'aide d'un conduit (3) auquel sont raccordées les buses (9, 9′, 9″) d'arrosage par pulvérisation et comportant une pompe doseuse (5), reliée par un conduit de liaison à un réservoir (11) de préparation de produit, cette pompe étant parcourue et actionnée par le fluide porteur délivré par la pompe (2) d'alimentation, la pompe doseuse (5), réglable d'après la concentration, introduisant le produit phytosanitaire, provenant du réservoir (11) de préparation, dans le conduit (3), dispositif caractérisé en ce que la pompe doseuse (5) est parcourue par la totalité du fluide porteur circulant dans le conduit (3), le fluide porteur agissant sur un élément d'entraînement en forme de piston (12), lequel est relié à un dispositif d'introduction dosée qui a la forme d'un piston doseur (13) pouvant coulisser dans un cylindre (14) relié au conduit (10) de liaison et qui comporte un dispositif de réglage de la concentration, réalisé sous forme d'un manchon (15) de réglage destiné à régler la course active ou utile du piston (13) doseur.

2. Dispositif selon la revendication 1, caractérisé en ce qu'à l'élément (12) d'entraînement sont reliés au moins deux dispositifs (13, 14 ; 13′, 14′) d'introduction dosée, qui sont raccordés chacun à un conduit (10, 10') particulier de liaison, lequel est relié aux différents réservoirs (11, 11′) contenant un produit ou une préparation.

3. Dispositif selon les revendications 1 ou 2, caractérisé en ce qu'il est prévu qu'il comporte un organe (4) pour commander la quantité de fluide porteur, fournie aux buses de projection par pulvérisation, en fonction de la vitesse de déplacement ou d'un autre paramètre du dispositif.

4. Dispositif selon les revendications 1 à 3, caractérisé en ce que, dans le conduit (3), un mélangeur (6) est monté en aval de la pompe doseuse (5).

5. Dispositif selon la revendication 4, caractérisé en ce que le mélangeur (6) a la forme d'un mélangeur du type cyclone.

6. Dispositif selon les revendications 4 et 5, caractérisé en ce que le volume du mélangeur (6) correspond au volume de réception de la pompe doseuse (5) correspondant à une course du piston (12).

7. Dispositif selon les revendications précédentes, caractérisé en ce que, entre un piston doseur (13) et un récipient (11) contenant un produit sous forme de préparation, est monté un robinet (17) de commutation, qui est relié à la cuve (1) contenant le fluide porteur ou à un tronçon du conduit (3) en amont de la pompe doseuse (5).

8. Dispositif selon les revendications précédentes, caractérisé en ce que le conduit (10) de liaison est relié, par l'intermédiaire d'un organe (18) à fermeture rapide, avec le réservoir (11) associé, contenant le produit sous forme d'une préparation.

9. Dispositif selon les revendications précédentes, caractérisé en ce que la pompe doseuse (5) est montée peu avant la subdivision du conduit (3) en divers segments de conduits ou en diverses largeurs partielles (9, 9′, 9″).

10. Dispositif selon les revendications précédentes, caractérisé en ce que la pompe doseuse (5) et éventuellement le mélangeur (6) sont réalisés sous forme d'un module (30) protégé de la poussière et des salissures et qui peut être inséré dans un conduit (3) existant.

11. Dispositif selon les revendications précédentes, caractérisé en ce que la pompe doseuse (5) et éventuellement le mélangeur (6) ou le module (30), peuvent être insérés par l'intermédiaire de tronçons élastiques de conduit dans le conduit (3).

7

12. Dispositif selon les revendications précédentes, caractérisé en ce qu'il est prévu (pour ce dispositif) un ensemble de traitement de données comportant un ordinateur (22), un appareil (25) de mesure de débit, un détecteur (23) pour déceler la vitesse de déplacement, un dispositif (4) de commande de la quantité de fluide porteur de passage et une commande (26) par un ou des circuits pour commander les diverses largeurs (9, 9′, 9″) partielles.

Fig. 1

Fig. 2

Fig. 3